# EUROPÄISCHE PATENTSCHRIFT

(11) **EP 3 433 552 B1**
(45) Veröffentlichungstag und Bekanntmachung des Hinweises auf die Patenterteilung: **20.05.2020**
(21) Anmeldenummer: 17713608.2
(22) Anmeldetag: 22.03.2017
(51) Int. Cl.: F25D 3/12, C01B 32/55

(54) **VORRICHTUNG ZUM DOSIEREN VON KOHLENDIOXIDSCHNEE**
DEVICE FOR METERING CARBON DIOXIDE SNOW
DISPOSITIF DE DOSAGE DE NEIGE CARBONIQUE

(30) Priorität: 26.03.2016 DE 102016003799
(43) Veröffentlichungstag der Anmeldung: 30.01.2019
(73) Patentinhaber: Messer France S.A.S., 92156 Suresnes Cedex (FR)
(72) Erfinder: FRÈRE, Émilien, 77100 Meaux (FR)
(74) Vertreter: Münzel, Joachim R.
(86) Internationale Anmeldenummer: PCT/EP2017/056833
(87) Internationale Veröffentlichungsnummer: WO 2017/167620

(56) Entgegenhaltungen:
- EP-A1- 0 478 316
- US-A- 2 120 943
- US-B1- 6 244 069

## Beschreibung

Die Erfindung betrifft eine Vorrichtung zum Dosieren von Kohlendioxidschnee, mit einem Vorlagebehälter, in den eine Zuleitung für flüssiges oder schneeförmiges Kohlendioxid sowie eine Gasabzugsleitung zum Abführen von Kohlendioxidgas einmündet, und der mit einer Ausgabeeinheit zum dosierten Abgeben von Kohlendioxidschnee ausgerüstet ist.

Um die Oberflächen insbesondere von Lebensmittelprodukten schnell einfrieren zu können, werden diese mit einem kryogenen Kältemittel, beispielsweise flüssigem Stickstoff oder Kohlendioxidschnee, besprüht. Die Behandlung erfolgt dabei vorzugsweise in einem Gefriertunnel mittels Injektionsdüsen oder sogenannter Schneehörner.

In Schneehörnern erfolgt die Erzeugung von Kohlendioxidschnee durch Entspannen von flüssigem Kohlendioxid unter Ausnutzung des Joule-Thomson-Effekts. Das Schneehorn umfasst dabei ein Entspannungsorgan in Form einer Düse, die üblicherweise im Kopfabschnitt des Schneehorns oberhalb eines senkrecht angeordneten Trichters angeordnet ist. Unter Druck stehendes, flüssiges Kohlendioxid wird an der Entspannungsdüse auf einen Druck von unter 5,18 bar, beispielsweise 1 bar, entspannt, wobei ein Gemisch aus Kohlendioxidgas und Kohlendioxidschnee entsteht. Der Kohlendioxidschnee fällt im Trichter unter der Wirkung der Schwerkraft auf eine zu kühlende Oberfläche hinab. Beim Einsatz derartiger Schneehörner führt jedoch der starke Strom des bei der Entspannung gleichzeitig erzeugten Kohlendioxidgases zu einer Verwirbelung der leichten Schneepartikel und damit zu einer breiten Streuung der Schneepartikel vor der Mündungsöffnung des Schneehorns.

Es wurde bereits versucht, die Schneeteilchen mit Hilfe mechanischer Einrichtungen, wie etwa Trichter oder Leitbleche, stärker zu fokussieren, wie beispielsweise in der EP 1 188 715 A1, der US 4 415 346 A oder der GB 294 584 A beschrieben. Hierbei besteht allerdings die Tendenz, dass der Kohlendioxidschnee an den mechanischen Einrichtungen anbackt und den Betrieb der Einrichtung beeinträchtigt.

Aus der EP 2 363 377 A1 ist ein Schneehorn bekannt, bei dem zwischen einer Entspannungskammer und einer Austragsöffnung eine Förderschnecke angeordnet ist. Die Förderschnecke sorgt für eine Trennung des bei der Entspannung erzeugten Gasstroms vom Kohlendioxidschnee und transportiert den Kohlendioxidschnee präzise zum Einsatzort. Dadurch kann Kohlendioxidschnee ohne Verwirbelung durch den Gasstrom einem Verbraucher zugeführt werden. Allerdings erfolgt die Zuführung des Kohlendioxids kontinuierlich; zur gezielten Kühlung einzelner Produkte, die beispielsweise auf einem Förderband durch einen Kühltunnel transportiert werden, ist diese Vorrichtung nur bedingt geeignet.

Aus der US 4 145 894 A ist eine Vorrichtung zum Verteilen von Kohlendioxidschnee auf Produkte bekannt geworden, bei der flüssiges Kohlendioxid in einem Vorlagebehälter entspannt wird. Der dabei entstehende Kohlendioxidschnee sammelt sich im Vorlagebehälter, während das gleichzeitig erzeugte Kohlendioxidgas über eine Abgasleitung abgeführt wird. Am Boden des Vorlagebehälters ist eine Zellenradschleuse angeordnet, mittels der Kohlendioxidschnee aus dem Vorlagebehälter in vorgegebenen Mengen auf ein darunter liegendes Produkt aufgetragen werden kann.

Die EP 0 478 316 B1 beschreibt eine Vorrichtung zum Behandeln von Lebensmittelprodukten mit Kohlendioxidschnee, bei der der Boden eines mit einer Zuführung für flüssiges Kohlendioxid ausgerüsteten Vorlagebehälters mit einer Lochplatte sowie mit einem über die Lochplatte gespannten Drahtgewebe ausgestattet ist. Das Drahtgewebe hält den bei der Entspannung des flüssigen Kohlendioxids erzeugten Kohlendioxidschnee im Vorlagebehälter zurück. Im Einsatz der Vorrichtung wird mittels eines Wischers durch die Maschen des Drahtgewebes und die Öffnungen der Lochplatte hindurch Kohlendioxidschnee gepresst, der anschließend auf die Oberfläche des zu behandelnden Produkts fällt.

Bei den beiden zuletzt genannten Vorrichtungen besteht jedoch weiterhin die Gefahr, dass innerhalb der Zellenradschleuse oder in den Maschen des Drahtgewebes Kohlendioxidschnee anbackt oder Feuchte aus der Umgebungsatmosphäre ebendort anfriert, und so die Funktionsfähigkeit der Apparatur beeinträchtigt wird. Aus der US 2 120 943 B1 ist eine Vorrichtung zum volumetrischen Dosieren von Kohlendioxidschnee bekannt, bei der Kohlendioxidschnee durch Entspannen von flüssigem Kohlendioxid hergestellt und einem Vorlagebehälter zugeführt wird. Am Vorlagebehälter sind zwei vertikal voneinander beabstandete Schieberventile vorgesehen, die im Vorlagebehälter ein genau definiertes Schneevolumen zur weiteren Verwendung abtrennen. Bei diesem Gegenstand ist es aber nicht möglich, definierte, jedoch unterschiedliche Schneemengen abzugeben.

Aufgabe der Erfindung ist daher, eine Vorrichtung zum Bereitstellen einer möglichst genau dosierten Menge an Kohlendioxidschnee zu schaffen, bei der die Zuführung des Kohlendioxidschnees an die Produkte nicht durch einen Gasstrom gestört wird, die Gefahr der Beeinträchtigung der Funktionsfähigkeit durch Anbacken von Kohlendioxidschnee oder Festfrieren von Feuchtigkeit minimiert ist und mit der zudem definierte, aber unterschiedliche Volumina an Kohlendioxidschnee abgegeben werden können.

Gelöst ist diese Aufgabe durch eine Vorrichtung mit den Merkmalen des Patentanspruchs 1.

Eine Vorrichtung der eingangs genannten Art und Zweckbestimmung ist also dadurch gekennzeichnet, dass die Ausgabeeinheit eine bodenseitig am Vorlagebehälter angeordnete Ausgabeöffnung, einen mit der Ausgabeöffnung zusammenwirkenden, horizontal beweglichen Schiebeboden, der zwischen einer die Ausgabeöffnung des Vorlagebehälters verschließenden ersten Position und einer die Ausgabeöffnung freigebenden zweiten Position bewegbar ist, sowie zumindest einen oberhalb des Schiebebodens und beabstandet von diesem angeordneten, gleichfalls horizontal beweglichen Trennboden umfasst.

Im Innern des vertikal angeordnete, beispielsweise rohrförmig ausgebildeten Vorlagebehälters mündet eine an eine Quelle für Kohlendioxid angeschlossene Zuführleitung. Bei der Zuführleitung handelt es sich beispielsweise um eine Zuleitung für flüssiges Kohlendioxid, die im Innern des Vorlagebehälters an einer Entspannungsdüse ausmündet. Der Vorlagebehälter besitzt auf seiner unterseitigen Stirnseite eine Ausgabeöffnung, die von dem Schiebeboden verschlossen werden kann. Die Ausgabeöffnung erstreckt sich über einen Teil der Bodenfläche des Vorlagebehälters oder über die gesamte Bodenfläche des Vorlagebehälters. Beim Schiebbeboden handelt es sich um ein horizontal verschiebbares oder verschwenkbares Element, beispielsweise ein Blech, das der Größe und Form der Ausgabeöffnung angepasst ist. In seiner Schließposition erstreckt sich der Schiebeboden ganz oder teilweise in die Ausgabeöffnung hinein und versperrt sie dadurch so weit, das dem Vorlagebehälter zugeführter oder in diesem erzeugter Kohlendioxidschnee nicht oder nur in einem nicht nennenswerten Umfang aus der Ausgabeöffnung entweichen kann, sondern sich vielmehr oberhalb des Schiebebodens im Vorlagebehälter ansammelt. In seiner Öffnungsposition gibt der Schiebeboden die Ausgabeöffnung frei und im Vorlagebehälter oberhalb des Schiebebodens befindlicher Kohlendioxidschnee fällt aus dem Vorlagebehälter hinaus.

Bei dem oberhalb des Schiebebodens angeordneten Trennboden handelt es sich um ein horizontal in das Innere des Vorlagebehälters hinein verschiebbares oder verschwenkbares Element, beispielsweise ein dünnes, formstabiles Blech. Der Trennboden kann mittels eines Antriebs aus einer ersten Position (hier auch "Öffnungsposition" genannt), in der sich der Trennboden außerhalb des Innenraums des Vorlagebehälters befindet, in eine zweite Position (hier auch "Schließposition" genannt) bewegt werden, in der der Trennboden den Querschnitt des Innenraums des Vorlagebehälters schneedicht absperrt und dabei Kohlendioxidschnee, der sich in dem unterhalb des Trennbodens befindlichen Abschnitt des Vorlagebehälters (hier "Dosierabschnitt" genannt) befindet, vom restlichen Kohlendioxidschnee oberhalb des Trennbodens abtrennt. Gleichzeitig verhindert der Trennboden in seiner Schließposition das Absinken von Kohlendioxidschnee aus dem oberen Bereich des Vorlagebehälters in den Dosierabschnitt. Beim Verfahren des Schiebebodens in seine Öffnungsposition fällt somit nur der im Dosierabschnitt befindliche Anteil des Kohlendioxidschnees aus dem Vorlagebehälter hinaus.

Durch eine abwechselnde Betätigung von Trennboden und Schiebeboden wird somit eine durch das Volumen des Dosierabschnitts festgelegte Menge an Kohlendioxidschnee abgegeben, ohne dass es beispielsweise zu einer Verwirbelung der Schneepartikel durch bei der Entspannung von flüssigem Kohlendioxid an der Entspannungsdüse erzeugtem Kohlendioxidgas kommt. Über die Zuleitung wird dem Vorlagebehälter kontinuierlich Kohlendioxid zugeführt, wobei entstehendes Kohlendioxidgas über die Gasabzugsleitung abgeführt wird.

In einer bevorzugten Ausgestaltung der Erfindung ist der Schiebeboden und/oder der mindestens eine Trennboden mit einer Antriebseinheit ausgerüstet. Die beispielsweise mit einem Elektromotor ausgerüstete Antriebseinheit steuert die automatische Bewegung des Schiebebodens bzw. des Trennbodens von der jeweiligen Öffnungsposition in die jeweilige Schließposition und zurück.

Gemäß der Erfindung ist der vertikale Abstand zwischen dem Schiebeboden und dem Trennboden veränderbar. Beispielsweise umfasst der Vorlagebehälter dazu zwei vertikal gegeneinander verschiebbare Abschnitte, wobei in einem unteren Abschnitt der Schiebeboden und in einem oberen Abschnitt ein Trennboden angeordnet ist. Durch die Verschiebung beider Abschnitte gegeneinander kann der vertikale Abstand zwischen Schiebeboden und Trennboden - und damit das Volumen des Dosierabschnitts - stufenlos verändert werden. Die Bewegung der beiden Abschnitte gegeneinander erfolgt manuell oder motorgetrieben. In einer besonders bevorzugten Ausgestaltung greifen die beiden Abschnitte des Vorlagebehälters teleskopartig übereinander und lassen sich entlang ihrer gemeinsamen Längsachse stufenlos gegeneinander verschieben.

Eine besonders vorteilhafte Ausgestaltung der Erfindung sieht vor, dass die Ausgabeeinheit zwei oder mehr vertikal beabstandet voneinander angeordnete Trennböden aufweist, die unabhängig voneinander bewegbar sind. Durch eine Mehrzahl von Trennböden kann die Menge an ausgegebenem Kohlendioxidschnee gezielt verändert und den jeweiligen Erfordernissen angepasst werden. Insbesondere kann die Kohlendioxidmenge auf diese Weise der Größe der zu kühlenden Produkte und/oder dem Kältebedarf der jeweiligen Kühlaufgabe angepasst werden, ohne dass die Vorrichtung dazu aufwändig umgebaut werden müsste.

Eine bevorzugte Verwendung einer erfindungsgemäßen Vorrichtung besteht darin, Produktoberflächen auf eine niedrige Temperatur zu bringen oder, etwa für die Dauer eines Transports, auf einer niedrigen Temperatur zu halten. Eine besonders bevorzugte Verwendung besteht in der Abkühlung oder dem Kalthalten von Lebensmittelprodukten, beispielsweise Teiglinge, Fleisch, Fisch, Obst und Gemüse, jedoch ist die Erfindung nicht hierauf beschränkt. Vielmehr können auch andere Produkte, beispielsweise chemische oder pharmazeutische Erzeugnisse, abgekühlt, bzw. auf einer niedrigen Temperatur gehalten werden. Die erfindungsgemäße Vorrichtung kann insbesondere auch in einem Kühltunnel angeordnet sein, um Produktoberflächen mit Kohlendioxidschnee zu beaufschlagen.

Anhand der Zeichnungen sollen Ausführungsbeispiele der Erfindung näher erläutert werden. In schematischen Ansichten zeigen:
- Fig. 1:: Eine Vorrichtung in einer vertikalen Schnittansicht,
- Fig. 2a bis 2f:: Verschiedene Arbeitsschritte im Betrieb der Vorrichtung aus Fig. 1,
- Fig. 3:: Eine Vorrichtung in einer anderen Ausführungsform,
- Fig. 4:: Eine erfindungsgemäße Vorrichtung.

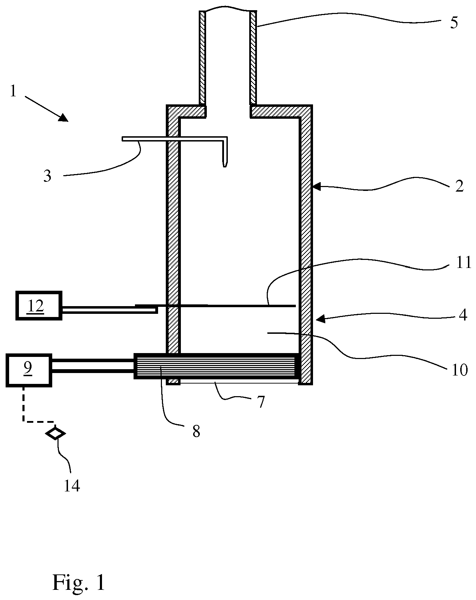

Die in Fig. 1 gezeigte Vorrichtung 1 umfasst einem Vorlagebehälter 2 mit thermisch gut isolierten Wänden. In das Innere des Vorlagebehälters 2 mündet eine Zuleitung 3 zum Zuführen von flüssigem Kohlendioxid ein, an deren Ende eine Entspannungsdüse angeordnet ist. Anstelle der hier gezeigten Zuleitung 3 für flüssiges Kohlendioxid ist im Rahmen der Erfindung auch direkte eine Zuführung für Kohlendioxidschnee vorstellbar, etwa der Art wie in der EP 2 363 377 A1 beschrieben. Möglich sind auch mehrere Zuleitungen für flüssiges Kohlendioxid und/oder Kohlendioxidschnee. Im unteren Bereich des Vorlagebehälters 2 befindet sich eine im Folgenden näher beschriebene Ausgabeeinheit 4, im oberen Bereich des Vorlagebehälters 2 mündet eine Gasabzugsleitung 5 aus.

Die Ausgabeeinheit 4 umfasst eine auf der unteren Stirnseite 6 des Vorlagebehälters 2 angeordnete Ausgabeöffnung 7, die die Stirnseite 6 ganz oder teilweise ausfüllt und die mit einem horizontal bewegbaren Schiebeboden 8 verschließbar ist. Der Schiebeboden 8 wird mittels einer Antriebseinheit 9 betätigt, die beispielsweise einen Elektromotor umfasst und mittels einer hier nicht gezeigten zentralen Steuerung angesteuert werden kann. In der in Fig. 1 gezeigten Position verschließt der Schiebeboden 9 die Ausgabeöffnung 7. An die Ausgabeöffnung 7 kann sich bei Bedarf ein (hier nicht gezeigter) Dosiertrichter anschließen.

Vertikal beabstandet vom Schiebeboden 8 ist ein gleichfalls horizontal verschiebbarer oder verschwenkbarer Trennboden 11 angeordnet, bei dem es sich beispielsweise um ein dünnes Blech oder einen verschiebbaren Boden handelt, dessen dem Innenraum des Vorlagebehälters zugewandten Kante schneidenartig ausgebildet sein kann. Der Trennboden 11 ist mit Hilfe einer beispielsweise elektrisch angetriebenen Antriebseinheit 12 aus einer Öffnungsposition, in der sich der Trennboden 11 außerhalb des Innenraums des Vorlagebehälters 2 befindet, in eine Schließposition verschieb- oder verschwenkbar, in der der Trennboden 11 den Innenraum des Vorlagebehälters 2 schneedicht in zwei Teilvolumina trennt, wobei das sich zwischen Trennboden 11 und Schiebeboden 9 erstreckende untere Teilvolumen einen Dosierabschnitt 10 definiert.

Die Antriebseinheit 9 und/oder die Antriebseinheit 12 kann bzw. können mit einer Sensoreinrichtung 14 zusammenwirken, die die Position eines (hier nicht gezeigten) mit Kohlendioxidschnee zu beaufschlagenden Produkts oder eines (gleichfalls nicht gezeigten) mit Kohlendioxidschnee zu füllenden Behälters erfasst, um eine zielgenaue Beaufschlagung der Oberfläche des Produkts bzw. eine Befüllung des Behälters mit Kohlendioxidschnee zu ermöglichen.

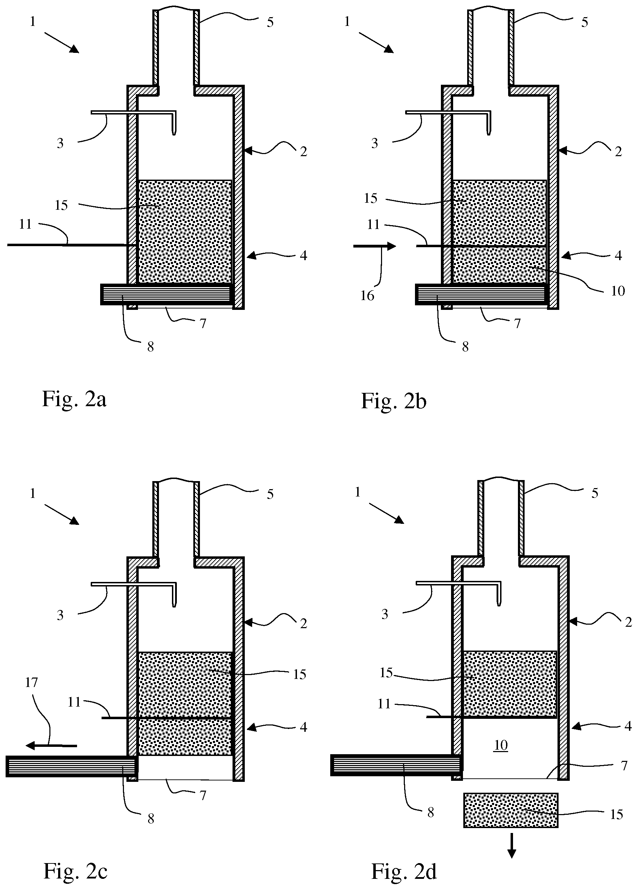

In Fig. 2a-f sind verschiedene Betriebszustände der Vorrichtung 1 gezeigt. Im laufenden Betrieb der erfindungsgemäßen Vorrichtung 1 wird dem Vorlagebehälter 2 kontinuierlich Kohlendioxidschnee 15 zugeführt. Dies erfolgt durch Zufuhr von flüssigem Kohlendioxid aus einem hier nicht gezeigten Tank über die Zuleitung 3, das innerhalb des Vorlagebehälters 2 an einer an der Ausmündung der Zuleitung 3 angeordneten Entspannungsdüse auf einen Druck von unter 5,18 bar, bevorzugt auf Atmosphärendruck (1 bar), entspannt wird und in ein Gemisch aus Kohlendioxidschnee und Kohlendioxidgas übergeht. Während das im Vorlagebehälter 2 durch Entspannung oder Sublimation entstehende Kohlendioxidgas über die Gasabzugsleitung 5 abgeführt wird, sammelt sich der überwiegende Teil des Kohlendioxidschnees 15 im Innern des Vorlagebehälters 2 an.

In dem in Fig. 2a gezeigten Betriebszustand ist der Trennboden 11 seitlich vom Innenraum des Vorlagebehälters 2 angeordnet. Durch laufende Erzeugung oder Zufuhr von schneeförmigem Kohlendioxid füllt sich allmählich der Innenraum oberhalb des Schiebebodens 8 des Vorlagebehälters 2 mit Kohlendioxidschnee 15. Durch Betätigung der Antriebseinheit 12 wird der Trennboden 11 in Richtung des Pfeils 16 in seine Schließposition verfahren (Fig. 2b). Der sich im Dosierabschnitt 10 des Vorlagebehälters 2 befindliche Kohlendioxidschnee 15 wird dadurch vom übrigen innerhalb des Vorlagebehälters 2 befindlichen Kohlendioxidschnee 15 abgetrennt.

Durch Betätigung der Antriebseinheit 9 wird der Schiebeboden 8 in Richtung des Pfeils 17 in seine Öffnungsposition verschoben bzw. verschwenkt und dadurch die Ausgabeöffnung 7 freigegeben (Fig. 2c). Dadurch fällt der im Dosierabschnitt 10 befindliche Kohlendioxidschnee 15 aus dem Vorlagebehälter 2 hinaus, während der restliche Kohlendioxidschnee 15 durch der Trennboden 11 im Vorlagebehälter zurückgehalten wird (Fig. 2d). Der ausgeworfene Kohlendioxidschnee fällt beispielsweise direkt auf ein zu kühlendes Produkt oder in einen Behälter oder wird einem hier nicht gezeigten Dosiertrichter zugeführt.

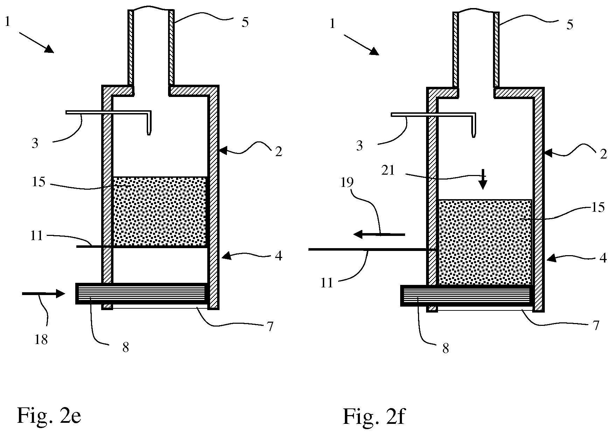

Durch erneute Betätigung der Antriebseinheit 9 wird der Schiebeboden 8 anschließend wieder in die Schließposition bewegt, wie durch Pfeil 18 angedeutet (Fig. 2e). Die Ausgabeöffnung 7 wird dadurch wieder verschlossen. Anschließend wird durch Betätigung der Antriebseinheit 12 der Trennboden in Richtung des Pfeils 19 in seine Öffnungsposition gebracht (Fig. 2f), und Kohlendioxidschnee 15 fällt aus dem oberen Teil des Vorlagebehälters 2 in den Dosierabschnitt 10, wie durch Pfeil 21 angedeutet. Der über die Ausgabeöffnung 7 abgeführte Kohlendioxidschnee wird durch laufende Zuführung bzw. laufende Erzeugung an der Zuleitung 3 ergänzt, womit der in Fig. 2a gezeigte Betriebszustand wieder erreicht wird.

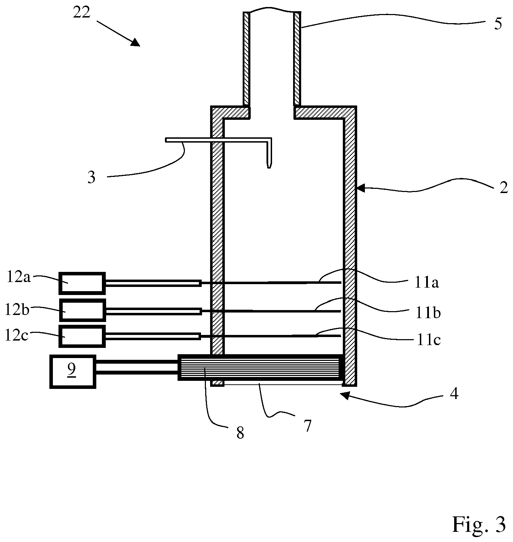

In der in Fig. 3 gezeigten Ausführungsform einer erfindungsgemäßen Vorrichtung 22 sind gleich wirkende Bestandteile mit den gleichen Bezugszeichen gekennzeichnet wie in Vorrichtung 1. Die Vorrichtung 22 unterscheidet sich von der Vorrichtung 1 lediglich dadurch, dass anstelle eines einzelnen Trennbodens 11 mehrere, im Ausführungsbeispiel drei, Trennböden 11a, 11b, 11c vorgesehen sind, die jeweils vertikal beabstandet voneinander angeordnet sind. Die im Aufbau gleich wie der Trennboden 11 ausgebildeten Trennböden 11a, 11b, 11c lassen sich mittels Antriebseinheiten 12a, 12b, 12c unabhängig voneinander bewegen.

Die Mehrzahl an Trennböden 11a, 11b, 11c ermöglicht eine Variation der Dosiermenge des Kohlendioxidschnees. Je nach der beabsichtigten Menge wird einer der Trennböden 11a, 11b oder 11c ausgewählt, um den im Vorlagebehälter 2 befindlichen Kohlendioxidschnee zu separieren. Die Dosiermenge entspricht jeweils der Menge an Kohlendioxidschnee im Volumen zwischen dem Schiebeboden 8 und dem jeweils ausgewählten Trennboden 11a, 11b, 11c.

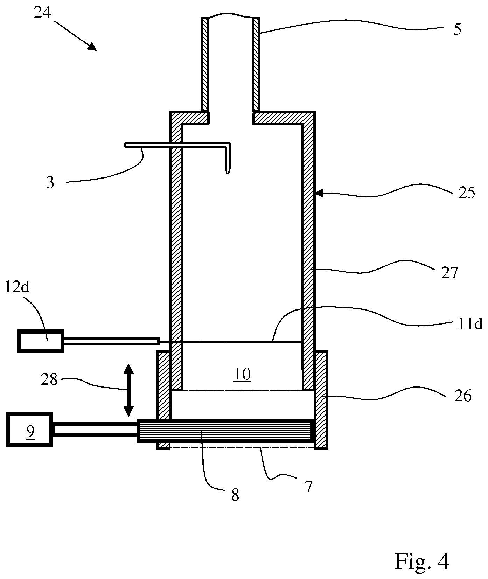

Die in Fig. 4 gezeigte Vorrichtung 24 ermöglicht eine stufenlose Einstellung der Dosiermenge an abzugebendem Kohlendioxidschnee. Auch hier sind gleich wirkende Bestandteile mit den gleichen Bezugszeichen gekennzeichnet wie in den Vorrichtungen 1 und 22. Die Vorrichtung 24 weist einen Aufgabebehälter 25 auf, der in zwei Abschnitte 26, 27 unterteilt ist, die teleskopartig gegeneinander verschiebbar ausgebildet ist, wie durch den Pfeil 28 angedeutet. Im unteren Abschnitt 26 ist ein Schiebeboden 8, im oberen Abschnitt 27 ein mit einem Antrieb 12d ausgerüsteter Trennboden 11d angeordnet. Schiebeboden 8 und Trennboden 11d sind bei der Vorrichtung 24 in gleicher Weise wie bei der Vorrichtung 1 aufgebaut. Zur Variation der abzugebenden Menge an Kohlendioxidschnee wird der untere Abschnitt 26 gegenüber dem oberen Abschnitt 27 so weit verschoben, bis das einen Dosierabschnitt 10 bildende Volumen zwischen Schiebeboden 8 und Trennboden 11d ausreicht, um die gewünschte Dosiermenge an Kohlendioxid aufzunehmen. Die Verschiebung der beiden Abschnitte 26, 27 gegeneinander erfolgt stufenlos und kann manuell oder mittels einer hier nicht gezeigten Antriebseinheit erfolgen.

Die Erfindung ermöglicht eine im Vergleich zu entsprechenden Vorrichtungen aus dem Stande der Technik genau Dosierung einer Kohlendioxidmenge und besitzt eine geringe Störanfälligkeit aufgrund von Schneeanbackungen oder sich bildender Wassereiskörper. Die Erfindung eignet sich insbesondere für Dosen von Kohlendioxidschnee von beispielsweise über 100g, bevorzugt über 500g, die in kurzen Zeitabständen von einigen Sekunden Dauer auf zu behandelnde Objekte aufgetragen werden sollen. Zudem wird das zugleich mit dem Kohlendioxidschnee erzeugte Kohlendioxidgas unmittelbar nach seiner Entstehung abgeführt, ohne sich mit einer umgebenden Atmosphäre zu vermischen. Es ist somit von hoher Reinheit und kann problemlos weiter- oder wiederverwendet werden. Die erfindungsgemäße Vorrichtung ermöglicht darüber hinaus auch eine genaue Dosierung von Kohlendioxidschnee für die Befüllung von Kühlmittelfächern von Transportbehältern, die für den Transport von zu kühlenden Produkten vorgesehen sind.

### Bezugszeichenliste

- 1: Vorrichtung
- 2: Vorlagebehälter
- 3: Zuleitung
- 4: Ausgabeeinheit
- 5: Gasabzugsleitung
- 6: Untere Stirnseite
- 7: Ausgabeöffnung
- 8: Schiebeboden
- 9: Antriebseinheit
- 10: Dosierabschnitt
- 11,11a,11b,11c,11d: Trennboden
- 12,12a,12b,12c,12d: Antriebseinheit
- 13: -
- 14: Sensoreinrichtung
- 15: Kohlendioxidschnee
- 16: Pfeil
- 17: Pfeil
- 18: Pfeil
- 19: Pfeil
- 20: -
- 21: Pfeil
- 22: Vorrichtung
- 23: -
- 24: Vorrichtung
- 25: Aufgabebehälter
- 26: Unterer Abschnitt
- 27: Oberer Abschnitt
- 28: Pfeil

## Patentansprüche

1. Vorrichtung zum Dosieren von Kohlendioxidschnee, mit einem Vorlagebehälter (2), in den eine Zuleitung (3) für flüssiges oder schneeförmiges Kohlendioxid sowie eine Gasabzugsleitung (5) zum Abführen von Kohlendioxidgas einmündet, und der mit einer Ausgabeeinheit (4) zum dosierten Abgeben von Kohlendioxidschnee (15) ausgerüstet ist,
**dadurch gekennzeichnet,**
**dass** die Ausgabeeinheit (4) eine bodenseitig am Vorlagebehälter (2) angeordnete Ausgabeöffnung (7), einen mit der Ausgabeöffnung (7) zusammenwirkenden, horizontal beweglichen Schiebeboden (8), der zwischen einer die Ausgabeöffnung (7) des Vorlagebehälters (2) verschließenden ersten Position und einer die Ausgabeöffnung (7) freigebenden zweiten Position bewegbar ist, sowie zumindest einen oberhalb des Schiebebodens (8) am Vorlagebehälter (2) angeordneten horizontal beweglichen Trennboden (11, 11a, 11b, 11c, 11d) umfasst, der von einer ersten, den Innenraum des Vorlagebehälters (2) in zwei Teilvolumina separierende Position in eine zweite, vom Innenraum des Vorlagebehälters (2) beabstandete Position bewegbar ist, wobei der vertikale Abstand zwischen dem Schiebeboden (8) und dem Trennboden (11d) veränderbar ist.

2. Vorrichtung nach Anspruch 1, **dadurch gekennzeichnet, dass** der Schiebeboden (8) und der Trennboden (11, 11a, 11b, 11c, 11d), bzw. die Trennboden (11a, 11b, 11c, 11d), mit jeweils einer Antriebseinheit (9, 12, 12a, 12b, 12c, 12d) ausgerüstet sind.

3. Vorrichtung nach einem der vorhergehenden Ansprüche, **dadurch gekennzeichnet, dass** der Vorlagebehälter (2) zwei teleskopartig gegeneinander verschiebbare Abschnitte (26, 27) umfasst, wobei in einem unteren Abschnitt (26) ein Schiebeboden (8) und in einem oberen Abschnitt (27) ein Trennboden (11d) angeordnet ist.

4. Vorrichtung nach einem der vorhergehenden Ansprüche, **dadurch gekennzeichnet, dass** die Ausgabeeinheit (4) mehrere übereinander angeordnete Trennböden (11a, 11b, 11c) aufweist, die unabhängig voneinander horizontal bewegbar sind.

## Claims

1. Apparatus for metering carbon dioxide snow, having a storage container (2) into which a supply line (3) for carbon dioxide in liquid or snow-like form and a gas extraction line (5) for the discharge of carbon dioxide gas opens, and which is equipped with a discharge unit (4) for the metered discharge of carbon dioxide snow (15),
**characterized**
**in that** the discharge unit (4) comprises a discharge opening (7) which is arranged at a base side on the storage container (2), a horizontally movable sliding base (8) which interacts with the discharge opening (7) and which is movable between a first position, in which it closes the discharge opening (7) of the storage container (2), and a second position, in which it opens up the discharge opening (7), and at least one horizontally movable separating base (11, 11a, 11b, 11c, 11d) which is arranged above the sliding base (8) on the storage container (2) and which is movable from a first position, in which it separates the interior space of the storage container (2) into two partial volumes, into a second position, in which said separating base is spaced apart from the interior space of the storage container (2), wherein
the vertical spacing between the sliding base (8) and the separating base (11d) is variable.

2. Apparatus according to Claim 1, **characterized in that** the sliding base (8) and the separating base (11, 11a, 11b, 11c, 11d), or the separating bases (11a, 11b, 11c, 11d), are equipped with in each case one drive unit (9, 12, 12a, 12b, 12c, 12d).

3. Apparatus according to one of the preceding claims, **characterized in that** the storage container (2) comprises two sections (26, 27) which are displaceable relative to one another in telescopic fashion, wherein a sliding base (8) is arranged in a lower section (26) and a separating base (lid) is arranged in an upper section (27).

4. Apparatus according to one of the preceding claims, **characterized in that** the discharge unit (4) has multiple separating bases (11a, 11b, 11c) arranged one above the other, which are horizontally movable independently of one another.

## Revendications

1. Dispositif de dosage de neige carbonique, comprenant un récipient collecteur (2) sur lequel débouche une conduite d'alimentation (3) pour du dioxyde de carbone liquide ou neigeux ainsi qu'une conduite d'échappement de gaz (5) pour évacuer du gaz carbonique, et équipé d'une unité de sortie (4) pour une distribution dosée de neige carbonique (15),
**caractérisé en ce que** l'unité de sortie (4) comprend une ouverture de sortie (7) disposée sur le récipient collecteur (2) côté fond, un fond coulissant (8) mobile horizontalement, coopérant avec l'ouverture de sortie (7) et pouvant être déplacé entre une première position fermant l'ouverture de sortie (7) du récipient collecteur (2) et une deuxième position libérant l'ouverture de sortie (7), ainsi qu'au moins un fond de séparation (11, 11a, 11b, 11c, 11d) mobile horizontalement, disposé au-dessus du fond coulissant (8) sur le récipient collecteur (2) et pouvant être déplacé d'une première position séparant l'espace intérieur du récipient collecteur (2) en deux volumes partiels à une deuxième position espacée de l'espace intérieur du récipient collecteur (2), la distance verticale entre le fond coulissant (8) et le fond de séparation (11d) étant variable.

2. Dispositif selon la revendication 1, **caractérisé en ce que** le fond coulissant (8) et le fond de séparation (11, 11a, 11b, 11c, 11d) ou les fonds de séparation (11a, 11b, 11c, 11d) sont respectivement équipés d'une unité d'entraînement (9, 12, 12a, 12b, 12c, 12d).

3. Dispositif selon l'une quelconque des revendications précédentes, **caractérisé en ce que** le récipient collecteur (2) comprend deux sections (26, 27) pouvant être déplacées l'une par rapport à l'autre de manière télescopique, un fond coulissant (8) étant disposé dans une section inférieure (26) et un fond de séparation (11d) étant disposé dans une section supérieure (27).

4. Dispositif selon l'une quelconque des revendications précédentes, **caractérisé en ce que** l'unité de sortie (4) présente plusieurs fonds de séparation (11a, 11b, 11c) disposés les uns au-dessus des autres qui peuvent être déplacés horizontalement indépendamment les uns des autres.
